# EUROPÄISCHE PATENTANMELDUNG

(11) **EP 0 989 336 A1**
(43) Veröffentlichungstag der Anmeldung: **29.03.2000**
(21) Anmeldenummer: 99116484.9
(22) Anmeldetag: 23.08.1999
(51) Int. Cl.: F16H 59/02

(54) **Wähleinrichtung für ein Fahrzeug-Getriebe sowie Schaltermodul hierzu**

(30) Priorität: 26.09.1998 DE 19844276
(71) Anmelder: Dr.Ing. h.c.F. Porsche Aktiengesellschaft, 70435 Stuttgart (DE)
(72) Erfinder: Sander, Edmund, 71229 Leonberg (DE); Gruener, Jens, 70374 Stuttgart (DE)

(57) **Zusammenfassung**

Die Erfindung betrifft eine Wähleinrichtung für ein Fahrzeug-Getriebe, wobei ein Wählhebel in zwei Schaltgassen bewegbar ist. In der ersten Schaltgasse können mit Hilfe des Wählhebels Automatik-Positionen des Getriebes gewählt werden, während in der zweiten Schaltgasse durch den Wählhebel sequentiell Getriebeübersetzungen wählbar sind. Hierzu sind in der zweiten Schaltgasse Schalter zum Erfassen der sequentiellen Wählvorgänge vorgesehen.

## Beschreibung

Die Erfindung betrifft eine Wähleinrichtung für ein Fahrzeug-Getriebe, wobei ein Wählhebel in zwei Schaltgassen bewegbar ist. In der ersten Schaltgasse können mit Hilfe des Wählhebels Automatik-Positionen des Getriebes gewählt werden, während in der zweiten Schaltgasse durch den Wählhebel sequentiell Getriebeübersetzungen wählbar sind. Hierzu sind in der zweiten Schaltgasse Schalter zum Erfassen der sequentiellen Wählvorgänge vorgesehen.

Eine derartige Schaltvorrichtung ist beispielsweise aus der DE 39 27 248 C1 bekannt geworden. Bei dieser Wählvorrichtung ist der Wählhebel in der zweiten Gasse zwischen zwei federbelasteten Zapfen aufgenommen. Beim Verschwenken des Wählhebels gegen die Federkraft betätigen die Zapfen seitlich angeordnete Mikroschalter. Die Mikroschalter und die Zapfen sind auf einer gemeinsamen Trägerplatte angeordnet, die gleichzeitig die Führung für den Wählhebel sowie eine Abdeckung eines nach oben offenen Gehäuses der Wähleinrichtung bildet. Hierzu ist die Trägerplatte mit dem Gehäuse verschraubt.

Gegenüber diesem Stand der Technik ist es Aufgabe der Erfindung, eine Wähleinrichtung zu schaffen, die hinsichtlich der Montage vereinfacht ist.

Diese Aufgabe wird erfindungsgemäß mit den Merkmalen der Patentansprüche 1 und 5 gelöst. Die vorgeschlagene Wähleinrichtung faßt die Schalter und Zapfen zu einem Schaltermodul zusammen. Ein solches Schaltermodul kann getrennt von der Endmontage der Wähleinrichtung vorab aufgebaut und justiert werden. Von besonderer Bedeutung ist hierbei, daß die Schalter durch die Zapfen betätigt sind, so daß eine Justage der Schalter hinsichtlich der Zapfen notwendig ist. Gleichzeitig sind damit alle elektrischen Einrichtungen der Wähleinrichtung zu einem Modul zusammengefaßt, so daß an diesem Modul ein einziger Kabelschwanz angeordnet werden kann.

Das erfindungsgemäße Schaltermodul weist eine durchgehende Bohrung zur Aufnahme der Zapfen auf. Eine Öffnung, in der ein Widerlager für die Federn zur Belastung der Zapfen gehalten ist, ist mit ihrem Durchmesser so groß gewählt, daß die Zapfen durch diese Öffnung hindurchgeführt werden können. Durch diese Ausbildung des Schaltermodules sind die Zapfen von der Außenseite des Schaltermodules her montierbar und ein Austausch der Zapfen ist somit auch bei montiertem Schaltermodul möglich.

Vorteilhafte Weiterbildungen der Erfindung sind in den Unteransprüchen dargestellt.

Für die Wähleinrichtung wird vorgeschlagen, daß das Schaltermodul so gestaltet ist, daß ein durch die erste Schaltgasse gebildeter Zwischenraum überbrückt wird. Hierzu ist das Schaltermodul zusätzlich mit einer gegenüberliegenden Wandung verbunden. Durch die Überbrückung des Zwischenraumes wird die Steifigkeit des Gehäuses der Wähleinrichtung erhöht, wobei die Fertigung des Gehäuses dadurch erleichtert ist, daß ein derartiger Zwischenraum vorgesehen werden kann.

Zur Befestigung des Schaltermodules am Gehäuse der Wähleinrichtung sind an der Oberseite des Gehäuses konische Zapfen vorgesehen, die in korrespondierende konische Öffnungen eingreifen. Durch die konischen Zapfen ist das Schaltermodul spielfrei am Gehäuse gehalten. Damit wird auch vermieden, daß bei der Betätigung der Zapfen und Schalter durch den Wählhebel bzw. bei der Überbrückung des Zwischenraumes zusätzliches Spiel auftritt.

Weiterhin wird für die Wähleinrichtung vorgeschlagen, zur Befestigung des Schaltermodules am Gehäuse die gehäuseseitigen Aufnahmepunkte mit Bohrungen zu versehen, in die Rastzapfen einer Abdeckung für die Wähleinrichtung eingreifen. Hierbei greifen die Rastzapfen durch die Öffnungen des Schaltermodules hindurch und das Schaltermodul ist mit der Befestigung der Abdeckung am Gehäuse festgelegt, ohne daß hierfür zusätzliche Befestigungsmittel notwendig wären. Auch wenn zur Befestigung der Abdeckung in der Regel Rastzapfen ausreichend sind, kann es unter besonderen Umständen notwendig sein, die Abdeckung durch Spreizbolzen, Schrauben oder ähnliches am Gehäuse zu befestigen. Auch hierbei sind aber zur Befestigung des Schaltermodules keine weiteren Maßnahmen erforderlich.

Hinsichtlich des Schaltermodules wird vorgeschlagen, daß an dem Zapfen endseits ein umlaufender Bund vorgesehen ist, dessen Außendurchmesser größer als der Außendurchmesser der Zapfen gewählt ist. Durch diese Ausbildung der Zapfen ist sichergestellt, daß die Zapfen im montierten Zustand eine definierte Lage einnehmen, und so eine Bewegung des Wählhebels durch zu weit hervorstehende Zapfen sicher vermieden ist. Schließlich wird vorgeschlagen, das Widerlager für die Feder in der Öffnung mit einem Bajonettverschluß zu halten. Neben der vereinfachten Montage ist hierbei von Vorteil, daß der Bajonettverschluß nach seiner Montage eine definierte Lage in axialer Richtung einnimmt.

Die Erfindung ist nachstehend anhand des in den Figuren dargestellten Ausführungsbeispieles näher erläutert.

Es zeigen
- Fig. 1: eine Explosionsdarsteilung einer Wähleinrichtung und
- Fig. 2: eine Detaildarstellung der Lagerung eines Zapfens.

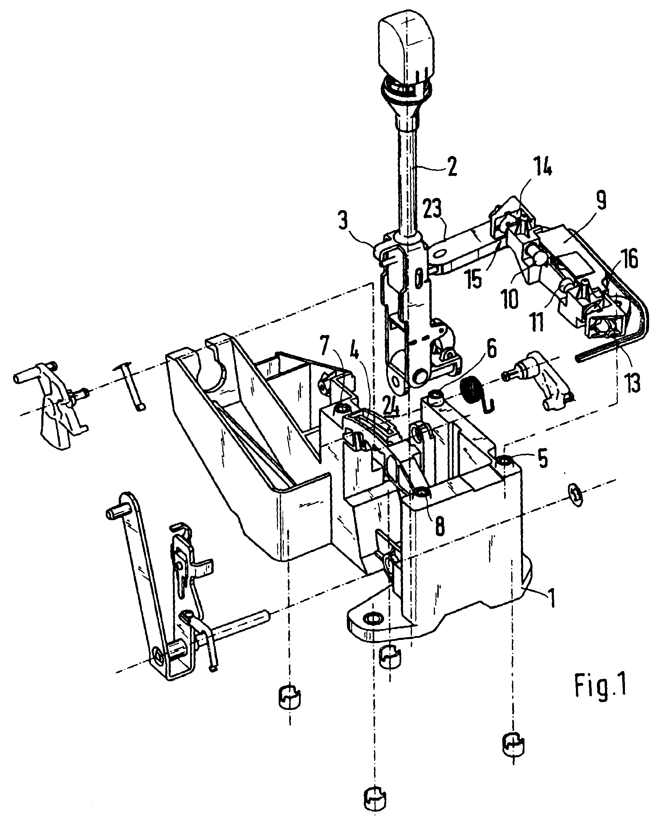

Ein Gehäuse 1 der in Fig. 1 gezeigten Wähleinrichtung nimmt einen Wählhebel auf, der in zwei Gassen verschwenkbar gehalten ist. Zur Führung des Wählhebels 2 am Gehäuse 1 ist am Gehäuse 1 ein Führungsfinger 3 vorgesehen, der in eine Nut 4 eingreift. An der Oberseite des Gehäuses 1 sind ferner vier konische Befestigungspunkte 5 bis 8 vorgesehen, die jeweils eine zentrale Bohrung aufweisen, in denen eine nicht gezeigte Abdeckung mittels einer Schnappverbindung gehalten ist.

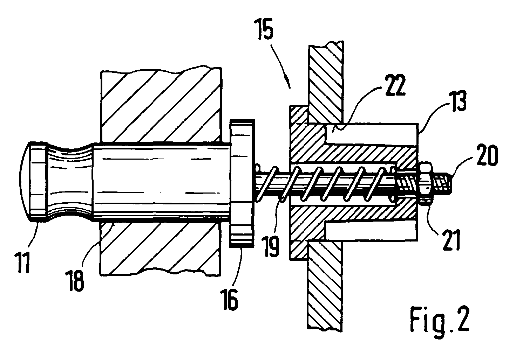

Ein Schaltermodul 9 ist mit federbelasteten Zapfen 10, 11 versehen, die in den Wählhebel in der zweiten Gasse zentriert ist einer neutralen Mitten-Position halten. Wie in Fig. 2 näher dargestellt, ist der Zapfen 11 in einer Bohrung 18 geführt, deren Durchmesser mit dem Außendurchmesser des Zapfens 11 korrespondiert. Endseits des Zapfens 11 ist ein Bund 16 vorgesehen, dessen Durchmesser größer als der Durchmesser der Bohrung 18 ist, so daß der Zapfen 11 nicht durch die Bohrung 18 hindurchtreten kann. Gegenüberliegend dem Zapfen 11 ist am Gehäuse ein Widerlager 13 gehalten. Das Widerlager 13 nimmt eine Feder 19 auf, die sich zwischen dem Widerlager 13 und dem Bund 16 des Zapfens 11 abstützt. Innerhalb der Feder 19 ist ein mit dem Zapfen 11 verbundener Stift 20 geführt, der durch das Widerlager 13 hindurchtritt und an der Außenseite des Widerlagers 13 eine Mutter 21 aufweist. Durch die Mutter 21 kann die Ausgangslage des Zapfens 11 fein eingestellt werden und damit die neutrale Mitten-Position des Wählhebels 2 verändert werden.

Zur Montage des Widerlagers 13 ist eine Öffnung 22 vorgesehen, deren Innendurchmesser größer als der Außendurchmesser des Bundes 16 gewählt ist. Zur Verriegelung des Widerlagers 13 in der Öffnung 22 ist ein Bajonettverschluß 15 vorgesehen.

Der Zapfen 11 bildet zusammen mit dem Widerlager 13, dem Stift 20, der Feder 19 und der Mutter 21 eine vormontierbare Baueinheit, die auch bei montiertem Schaltermodul 9 von außen in das Schaltermodul 9 eingeführt werden kann.

Aus Fertigungsgründen ist das Gehäuse 1 im Bereich des Wählhebels 2 als U-förmiger Rahmen ausgeführt. Um die Steifigkeit des Gehäuses 1 zu erhöhen, ist am Schaltermodul 9 eine Brücke 23 vorgesehen, die einen Zwischenraum 24 des Gehäuses 1 überbrückt, indem sie zwischen den Befestigungspunkten 6 und 7 eine formschlüssige Verbindung schafft.

## Patentansprüche

1. Wähleinrichtung für ein Fahrzeug-Getriebe, wobei ein Wählhebel (2) in zwei Schaltgassen bewegbar ist und in der ersten Schaltgasse Automatik-Positionen des Getriebes und in der zweiten Schaltgasse sequentiell Getriebeübersetzungen wählbar sind, wobei ferner in der zweiten Schaltgasse Schalter (25) zum Erfassen der Wählvorgänge vorgesehen sind, **dadurch gekennzeichnet,** daß die Schalter mit federbelastete Zapfen zur Zentrierung des Wählhebels in einer neutralen Mitten-Position zu einem Schaltermodul (9) zusammengefaßt sind.

2. Wähleinrichtung nach Anspruch 1, **dadurch gekennzeichnet,** daß sich das Schaltermodul (9) über einen durch die erste Schaltgasse gebildeten Zwischenraum (24) in einem Gehäuse (1) der Wähleinrichtung hinweg erstreckt und mit der gegenüberliegenden Wandung verbunden ist.

3. Wähleinrichtung nach Anspruch 1 oder 2, **dadurch gekennzeichnet,** daß an der Oberseite eines Gehäuses (1) der Wähleinrichtung konische Zapfen (5-8) vorgesehen sind, die in korrespondierende konische Öffnungen am Schaltermodul (9) eingreifen.

4. Wähleinrichtung nach Anspruch 4, **dadurch gekennzeichnet,** daß Rastzapfen einer Abdeckung der Wähleinrichtung durch die Öffnungen des Schaltermodules (9) hindurch in Bohrungen eingreifen, die innerhalb der Zapfen (5-8) vorgesehen sind.

5. Schaltermodul (9) für eine Wähleinrichtung nach einem der Ansprüche 1 bis 5 mit einander gegenüberliegenden federbelasteten Zapfen (10,11) zur Zentrierung des Wählhebels (2) in einer neutralen Mitten-Position, **dadurch gekennzeichnet,** daß
■ eine Bohrung (18) zur Aufnahme der Zapfen (10) vorgesehen ist, deren Durchmesser mit dem Durchmesser der Zapfen korrespondiert,
■ ein Widerlager (13) für die Feder (19) in einer Öfnung (22) gehalten ist, deren Durchmesser zumindest so groß wie der Außendurchmesser der Zapfen gewählt ist,

6. Schaltermodul nach Anspruch 6, **dadurch gekennzeichnet,** daß endseits der Zapfen ein umlaufender Bund (16) vorgesehen ist, dessen Außendurchmesser größer als der Außendurchmesser der Zapfen (10) gewählt ist.

7. Schaltermodul nach Anspruch 6 oder 7, **dadurch gekennzeichnet,** daß das Widerlager (13) in der Öffnung (22) mit einem Bajonettverschluß (15) gehalten ist.
